# EUROPÄISCHE PATENTANMELDUNG

(11) **EP 3 910 607 A1**
(43) Veröffentlichungstag der Anmeldung: **17.11.2021**
(21) Anmeldenummer: 21169586.1
(22) Anmeldetag: 21.04.2021
(51) Int. Cl.: G07C 9/30, G07C 9/10, G07C 9/00, G07C 9/25, G07C 9/15

(54) **PASSIERERKENNUNGSSYSTEM UND VERFAHREN ZUR BERÜHRUNGSLOSEN ÜBERWACHUNG**

(30) Priorität: 14.05.2020 DE 102020113114
(71) Anmelder: Kaba Gallenschütz GmbH, 77815 Bühl (DE)
(72) Erfinder: Droll, Gerald, 77815 Bühl (DE); Vollmer, Arno, 77855 Achern (DE)
(74) Vertreter: Balder IP Law, S.L.

(57) **Zusammenfassung**

Die vorliegende Erfindung betrifft ein Passiererkennungssystem (1) zur berührungslosen Überwachung eines Passierbereichs mit zumindest einem Gehäuse (50), einer Bodenkante (51), insbesondere zur Aufstellung auf einen Boden (70) des Passierbereichs, und mit einem Kopfsensor (45) zur Erfassung eines Erfassungsbereichs (45). Ferner betrifft die Erfindung ein Verfahren zur berührungslosen Überwachung sowie ein Computerimplementiertes zu Ausführung des Verfahrens.

## Beschreibung

Die vorliegende Erfindung betrifft ein Passiererkennungssystem zur berührungslosen Überwachung eines Passierbereichs mit zumindest einem Gehäuse, einer Bodenkante, insbesondere zur Aufstellung auf einen Boden des Passierbereichs, und mit einem Kopfsensor zur Erfassung eines Erfassungsbereichs.

Im Stand der Technik sind derartige Passiererkennungssysteme bekannt. Nachteilig bei den bekannten Lösungen ist es, dass für eine zuverlässig Überwachung eine hohe Erstreckung des Passiererkennungssystems erforderlich ist und/oder dass die Überwachung nicht zuverlässig genug ist.

Aufgabe der vorliegenden Erfindung ist es, die vorstehenden Nachteile zumindest teilweise zu überwinden. Insbesondere ist es Aufgabe der vorliegenden Erfindung, ein Passiererkennungssystem und/oder ein Verfahren bereitzustellen, wobei das Passiererkennungssystem eine zuverlässige Überwachung, insbesondere bei geringer Höhe des Passiererkennungssystems, ermöglicht.

Die Aufgabe wird durch den unabhängigen Anspruch 1 gelöst. Vorteilhafte Weiterbildungen des Passiererkennungssystems sind in den abhängigen Ansprüchen, der Beschreibung und in den Figuren angegeben. Ferner wird die Aufgabe auch durch ein Verfahren nach Anspruch 11 und/oder ein computerimplementiertes Verfahren gemäß Anspruch 15 gelöst. Vorteilhafte Weiterbildungen des computerimplementierten Verfahrens und des Passiererkennungssystems sind in den abhängigen Ansprüchen, in der Beschreibung und in den Figuren angegeben.

Merkmale und Details, die in Zusammenhang mit dem erfindungsgemäßen Passiererkennungssystem beschrieben sind, gelten dabei auch in Zusammenhang mit dem erfindungsgemäßen Verfahren und dem erfindungsgemäßen computerimplementierten Verfahren und umgekehrt. Dabei können die in der Beschreibung und in den Ansprüchen erwähnten Merkmale jeweils einzeln für sich oder in Kombination erfindungswesentlich sein.

Insbesondere wird ein Passiererkennungssystem unter Schutz gestellt, mit dem das erfindungsgemäße Verfahren, insbesondere das Verfahren nach einem der Ansprüche 11 bis 15, ausführbar ist, wie auch ein Verfahren, das mit dem erfindungsgemäßen Passiererkennungssystem nach einem der Ansprüche 1 bis 10 ausgeführt werden kann.

Besonders vorteilhaft bei einem Passiererkennungssystem zur berührungslosen Überwachung eines Passierbereichs mit zumindest einem Gehäuse, einer Bodenkante, insbesondere zur Aufstellung auf einen Boden des Passierbereichs, und mit einem Kopfsensor zur Erfassung eines Erfassungsbereichs angegeben, ist es, dass der Erfassungsbereich des Kopfsensors oberhalb des Gehäuses liegt.

Anders ausgedrückt liegt der Erfassungsbereich in einer Höhe oberhalb der Höhe des Gehäuses ausgehend von der Bodenkante des Passiererkennungssystems. Anders ausgedrückt ist der Kopfsensor derart ausgebildet und/oder angeordnet, dass er seinen Erfassungsbereich oberhalb des höchsten Punktes des Gehäuses ausgehend von der Bodenkante des Passiererkennungssystems erfasst. Damit ist gemeint, dass der Erfassungsbereich des Kopfsensors oberhalb einer virtuellen horizontalen Ebene liegt, wobei die Ebene den höchsten Punkt des Gehäuses umfasst. Bei Anordnung mehrerer Gehäuse, insbesondere zur Begrenzung des Passierbereichs, kann der Erfassungsbereich oberhalb des einen Gehäuses oder oberhalb der mehreren Gehäuse liegen.

Mit der Bodenkante des Passiererkennungssystems ist dabei der unterste Punkt des Passiererkennungssystems gemeint, wobei der unterste Punkt auf den Boden des Passierbereichs gestellt wird. Insbesondere kann es sich bei der Bodenkante um den untersten Punkt eines Aufstellfußes des Gehäuses handeln.

Als Gehäuse wird ein Bauteil verstanden, welches eins oder mehrere Elemente des Passiererkennungssystems behausen kann. Das Gehäuse muss aber nicht zwingend nach außen abgeschlossen sein, sondern kann vielmehr zumindest eine oder mehrere Öffnungen und/oder Durchbrüche umfassen.

Insbesondere kann das Gehäuse dabei als Leitelement, insbesondere zur Durchleitung einer Person durch den Passierbereich, ausgebildet sein. Insbesondere kann das Gehäuse nach oben durch einen Handlauf als Gehäuseoberteil begrenzt sein.

Dadurch wird ermöglicht, mittels eines Passiererkennungssystems mit geringer Höhe, Bewegungsdaten oberhalb des Gehäuses von dem Passiererkennungssystem zu erfassen. Dadurch kann die Überwachung verbessert werden, insbesondere derart, dass Bewegungsdaten, die üblicherweise lediglich von Personen bewirkt werden, mittels des erfindungsgemäßen Passiererkennungssystems erfassbar sind.

Insbesondere kann der Erfassungsbereich des Kopfsensors in einer Höhe zwischen 1000 mm bis 2200 mm, insbesondere 1100 mm bis 2100 mm, insbesondere 1150 mm bis 2000 mm, insbesondere 1200 mm bis 1900 mm, insbesondere 1250 mm bis 1800 mm, insbesondere 1300 mm bis 1700 mm, insbesondere 1350 mm bis 1600 mm, insbesondere 1400 mm bis 1500 mm, ausgehend von der Bodenkante des Passiererkennungssystems liegen. Insbesondere kann die Erfassungsrichtung des Kopfsensors schräg nach oben ausgerichtet sein.

Der Kopfsensor kann für seine Erfassung wenigstens eine Quelle und wenigstens einen Empfänger aufweisen und/oder seinen Erfassungsbereich mittels Reflexion erfassen. Insbesondere kann der Kopfsensor als optischer und/oder optoelektronischer und/oder photoelektrischer Sensor ausgebildet sein. Insbesondere können dabei Kameras als Sensoren, insbesondere Fotokameras und/oder Videokameras, ausgeschlossen werden. Der Kopfsensor kann insbesondere als Lichtschranke und/oder Einweg-Lichtschranke und/oder Reflexions-Lichtschranke ausgebildet sein. Insbesondere kann der Kopfsensor als Infrarotsensor ausgeführt sein. Insbesondere kann der Kopfsensor optoelektrisch ausgeführt sein.

Das Passiererkennungssystems kann dabei weitere Bauteile insbesondere einen Identifikationsleser und/oder einen Ticketleser und/oder eine insbesondere mechanisch betriebene, Schleuse und/oder Tür umfassen.

Bevorzugt ist der Erfassungsbereich des Kopfsensors durch einen für den Kopfsensor transparenten Bereich des Gehäuses hindurch erfassbar. Der transparente Bereich ist dabei für die Erfassungsstrahlen des Sensors transparent. Insbesondere kann der transparente Bereich für nicht-sichtbares Licht, insbesondere für infrarote Strahlung und/oder UV-Strahlung, transparent und/oder für sichtbares Licht intransparent ausgeführt sein. Dadurch wird der Erfassungsbereich durch den transparenten Bereich hindurch erfasst. Dabei kann der Rest des Gehäuses intransparent ausgeführt werden. Der transparente Bereich kann dabei, insbesondere teilweise oder gänzlich, unidirektional oder bidirektional ausgeführt sein. Insbesondere kann der transparente Bereich derart ausgeführt sein, dass der Bereich für das menschliche Auge nicht durchsichtig ist.

Insbesondere kann dabei der Kopfsensor in oder an dem Gehäuse angeordnet sein. Insbesondere kann das Gehäuse eine Oberwand und/oder eine Seitenwand aufweisen, wobei der transparente Bereich in der Oberwand oder in der Seitenwand angeordnet sein kann.

Vorzugsweise weist das Passiererkennungssystem einen Handlauf auf. Insbesondere kann der Kopfsensor und/oder der transparente Bereich in dem Handlauf angeordnet sein. Der Handlauf kann dabei als Gehäuseoberteil ausgeführt sein und/oder das Gehäuse nach oben hin begrenzen. Insbesondere kann der transparente Bereich in einer Oberseite oder in einer Seitenwand des Handlaufs angeordnet werden. Ein derartiger Handlauf kann bei neuen Gehäusen als Gehäuseoberteil oder auch bei bestehenden Gehäusen modular eingebaut werden.

Bevorzugt ist mittels des Kopfsensors eine digitale oder serielle Meldung generierbar. Anders ausgedrückt ist der Kopfsensor derart ausgebildet, dass er aus seinen erfassten Erfassungsdaten eine digitale oder serielle Meldung generieren und/oder übermitteln kann. Insbesondere kann der Kopfsensor seine Erfassungsdaten, insbesondere mittels eines Senders, insbesondere drahtlos, an ein Bussystem, insbesondere CAN-Bussystem, oder direkt an eine Rechnereinheit, insbesondere an einen Empfänger der Rechnereinheit, übermitteln. Insbesondere kann der Kopfsensor optoelektrisch ausgeführt sein.

Bevorzugt ist der Kopfsensor als Reflexionssensor ausgebildet. Als Reflexionssensor erfasst der Kopfsensor seinen Erfassungsbereich mittels Reflexion. Somit braucht ein derartiger Sensor keine zweiteilige Ausführung aus Sender und Empfänger, sondern kann einteilig ausgeführt werden. Hierdurch kann die Gesamthöhe des Gehäuses und/oder des Passiererkennungssystems reduziert werden.

Vorzugsweise ist wenigstens eine entlang eines vertikalen Vektors verlaufende und mehrere Sensoren aufweisende erste Sensorleiste angeordnet, wobei sich die erste Sensorleiste in ihrem Einbauzustand maximal bis zu einer Höhe von 1300 mm, bevorzugt 1200 mm, besonders bevorzugt 1100 mm, ganz besonders bevorzugt 1000 mm, ausgehend von der Bodenkante des Passiererkennungssystems erstreckt Insbesondere kann sich dabei die erste Sensorleiste maximal bis zu einer Höhe von 950 mm, insbesondere 900 mm, insbesondere 850 mm, insbesondere 800 mm, ausgehend von der Bodenkante des Passiererkennungssystems erstreckt. Insbesondere kann die erste Sensorleiste in oder an dem Gehäuse oder in einem oder an einem weiteren Gehäuse angeordnet sein. Das Gehäuse und/oder das Passiererkennungssystem kann aufgrund der maximalen Höhe der ersten Sensorleiste relativ niedrig, insbesondere halbhoch, und muss nicht mannshoch ausgeführt werden.

Anders ausgedrückt erstreckt sich die erste Sensorleiste in ihrem Einbauzustand maximal bis zu einer Höhe von 1300 mm, insbesondere 1200 mm, insbesondere 1100 mm, insbesondere 1000 mm, insbesondere 900 mm, insbesondere 850 mm, insbesondere 800 mm, ausgehend von dem Boden des zu überwachenden Passierbereiches. Insbesondere bildet dabei die Bodenkante den bodenseitigen Abschluss des Passiererkennungssystems.

Mit der Anordnung der Sensoren entlang eines vertikalen Vektors ist gemeint, dass die Sensoren entlang einer Linie angeordnet sind, wobei die Linie zumindest eine vertikale Komponente aufweist. Bevorzugt sind die Sensoren entlang des vertikalen Vektors angeordnet, wobei die vertikale Komponente des Vektors zumindest 80, insbesondere 90, insbesondere 95, insbesondere 99, Prozent des Vektors ausmacht. Insbesondere können die Sensoren der ersten Sensorleiste auf einer vertikal verlaufenden Ebene oder entlang des vertikalen Vektors versetzt angeordnet sein. Insbesondere kann sich dabei die erste Sensorleiste minimal von einer Höhe von 1 mm, insbesondere 5 mm, insbesondere 10 mm, insbesondere 15 mm, insbesondere 20 mm, insbesondere 25 mm, insbesondere 30 mm, und maximal bis zu der angegebenen Höhe ausgehend von der Bodenkante des Passiererkennungssystems erstrecken.

Insbesondere kann sich dabei der Erfassungsbereich der ersten Sensorleiste minimal von einer Höhe von 1 mm, insbesondere 5 mm, insbesondere 10 mm, insbesondere 15 mm, insbesondere 20 mm, insbesondere 25 mm, insbesondere 30 mm, und maximal bis zu einer Höhe von 1300 mm, bevorzugt 1200 mm, bevorzugt 1100 mm, bevorzugt 1000 mm, besonders bevorzugt 900 mm, besonders bevorzugt 850 mm, besonders bevorzugt 800 mm, ausgehend von dem Bodenkante des Passiererkennungssystems erstrecken. Insbesondere können dazu die Strahlen der Sensorleiste senkrecht zu dem vertikalen Vektor verlaufen.

Ein einzelner Sensor kann für seine Erfassung wenigstens eine Quelle und wenigstens einen Empfänger aufweisen und/oder seinen Erfassungsbereich mittels Reflexion erfassen. Insbesondere kann ein einzelner Sensor als optischer und/oder optoelektronischer und/oder photoelektrischer Sensor ausgebildet sein. Insbesondere können dabei Kameras als Sensoren, insbesondere Fotokameras und/oder Videokameras, ausgeschlossen werden. Ein einzelner Sensor kann insbesondere als Lichtschranke und/oder Einweg-Lichtschranke und/oder Reflexions-Lichtschranke und/oder Infrarot-Lichtschranke ausgebildet sein. Eine Sensorleiste kann als Einheit aus mehreren zusammen gebauten und/oder zusammen geschalteten Sensoren, insbesondere auf einer Platine, ausgebildet sein. Alternativ kann eine Sensorleiste aus mehreren einzelnen Sensoren, insbesondere mit jeweils eigener Leitung und/oder eigenem Datenkanal, gebildet sein, wobei die einzelnen Sensoren in ihrem Einbauzustand entlang des vertikalen Vektors verlaufen. Der Abstand zwischen den Sensoren der Sensorleiste kann stets gleich sein oder von Sensor zu Sensor variieren. Zumindest ein Abstand, insbesondere jeder Abstand, zwischen zwei Sensoren kann dabei zwischen 5 mm und 50 mm, insbesondere zwischen 10 mm und 45 mm, insbesondere zwischen 15 mm und 40 mm, insbesondere zwischen 20 mm und 35 mm, insbesondere zwischen 25 mm und 30 mm, betragen. Insbesondere kann die erste Sensorleiste von 2 bis 60, insbesondere von 5 bis 50, insbesondere von 10 bis 40, insbesondere von 15 bis 30, insbesondere 20 bis 25 Sensoren, insbesondere 24 Sensoren, insbesondere 28, Sensoren aufweisen.

Gemäß einer Weiterbildung der vorliegenden Erfindung weist zumindest die erste Sensorleiste zumindest einen, insbesondere mehrere, der oberen Sensoren umfassenden Leistenkopf und einen zumindest einen Sensor, insbesondere mehrere Sensoren, umfassenden Leistenrumpf unterhalb des Leistenkopfs auf. Der Leistenkopf und/oder der Leistenrumpf kann jeweils als Einheit aus mehreren zusammen gebauten und/oder zusammen geschalteten Sensoren ausgebildet sein. Alternativ kann der Leistenkopf und/oder der Leistenrumpf aus mehreren einzelnen Sensoren, insbesondere mit jeweils eigener Leitung und/oder eigenem Datenkanal, gebildet sein, wobei der Leistenkopf und der Leistenrumpf im Einbauzustand entlang des vertikalen Vektors verlaufen. Insbesondere kann sich der Leistenkopf minimal von einer Höhe 600 mm, insbesondere 650 mm, insbesondere 700 mm, insbesondere 800 mm, insbesondere 850 mm, insbesondere 900 mm, und/oder maximal bis zu einer Höhe von 1300 mm, insbesondere 1200 mm, insbesondere 1100 mm, insbesondere 1000 mm, insbesondere 900 mm, insbesondere 850 mm, insbesondere 800 mm, ausgehend von der Bodenkante des Passiererkennungssystems erstrecken. Insbesondere kann der Leistenkopf und/oder der Leistenrumpf jeweils mehrere Sensoren umfassen. Insbesondere kann der Leistenkopf von 2 bis 30, insbesondere von 4 bis 25, insbesondere von 5 bis 20, insbesondere von 10 bis 15, insbesondere 3, Sensoren umfassen. Insbesondere kann der Leistenrumpf von 2 bis 60, insbesondere von 5 bis 50, insbesondere von 10 bis 40, insbesondere von 15 bis 30, insbesondere von 20 bis 25, insbesondere 20, insbesondere 24, Sensoren umfassen.

Bevorzugt umfasst das Passiererkennungssystem eine zweite zumindest einen Sensor, insbesondere mehrere Sensoren aufweisende Sensorleiste, wobei die zweite Sensorleiste neben der ersten Sensorleiste, insbesondere parallel zu der ersten Sensorleiste, angeordnet ist, wobei die zweite Sensorleiste weniger Sensoren als die erste Sensorleiste aufweist und/oder wobei die zweite Sensorleiste kürzer als die erste Sensorleiste ausgebildet ist und/oder wobei die zweite Sensorleiste sich über die Höhe des Leistenkopfs der ersten Sensorleiste erstreckt. Gemeint ist dabei bezüglich des Erfassungsbereichs der Sensoren neben der ersten Sensorleiste. Das bedeutet, dass die Erfassungsbereiche der beiden Sensorleisten nebeneinander liegen. Insbesondere können die beiden Sensorleisten dabei auf einer virtuellen Ebene angeordnet sein. Insbesondere kann die zweite Sensorleiste entlang eines vertikalen Vektors verlaufen. Insbesondere kann die zweite Sensorleiste von 2 bis 30, insbesondere 3 bis 25, insbesondere 4 bis 20, insbesondere 5 bis 15, insbesondere 8 bis 10, Sensoren aufweisen. Insbesondere kann die zweite Sensorleiste ebenfalls entlang eines vertikalen Vektors verlaufen, dessen vertikale Komponente von 80 bis 100, insbesondere von 90 bis 95, Prozent des Vektors ausmacht. Insbesondere kann sich die zweite Sensorleiste minimal von einer Höhe von 5 mm, insbesondere 10 mm, insbesondere 100 mm, insbesondere 400 mm, insbesondere 800 mm und/oder maximal bis zu einer Höhe der ersten Sensorleiste ausgehend von der Bodenkannte erstrecken. Bevorzugt kann sich die zweite Sensorleiste zumindest über die Höhe des Sensorkopfs der ersten Sensorleiste erstrecken.

Die zuvor beschriebenen Möglichkeiten der Ausführung der ersten Sensorleiste sowie der einzelnen Sensoren davon, insbesondere bezüglich der Erfassung und/oder der Bauweise und/oder des Abstandes und/oder der Übermittlung der Bewegungszustände, gelten für die zweite Sensorleiste entsprechend.

Bevorzugt ist eine, insbesondere unterhalb der ersten Sensorleiste, entlang eines horizontalen Vektors verlaufende dritte Sensorleiste mit zumindest einem Sensor, insbesondere zumindest zwei Sensoren, angeordnet. Mit der Anordnung der Sensoren entlang des horizontalen Vektors ist gemeint, dass die Sensoren entlang einer Linie angeordnet sind, wobei die Linie zumindest eine horizontale Komponente aufweist. Bevorzugt sind die Sensoren entlang des horizontalen Vektors angeordnet, wobei die horizontale Komponente zumindest von 80 bis 99, insbesondere von 85 bis 95, Prozent des Vektors ausmacht. Insbesondere können die Sensoren der ersten Sensorleiste auf einer vertikal verlaufenden Ebene oder entlang des horizontalen Vektors versetzt angeordnet sein.

Insbesondere kann sich die dritte Sensorleiste in einer Höhe von 3 bis 250 mm, insbesondere von 5 bis 200 mm, insbesondere von 15 bis 165 mm, insbesondere von 25 bis 150 mm, insbesondere von 30 bis 100 mm, insbesondere von 40 bis 50 mm, ausgehend von der Bodenkante des Passiererkennungssystems und/oder ausgehend von dem Boden des Passierbereichs angeordnet sein. Insbesondere kann die dritte Sensorleiste von 2 bis 50, von 3 bis 40, von 5 bis 30, von 10 bis 21, Sensoren umfassen.

Die zuvor beschriebenen Möglichkeiten der Ausführung der Sensorleiste sowie der einzelnen Sensoren davon, insbesondere bezüglich der Erfassung und/oder der Bauweise und/oder des Abstandes und/oder der Übermittlung der Bewegungszustände, gelten für die dritte Sensorleiste entsprechend.

Insbesondere kann das Passiererkennungssystem zumindest eine mechanische Sperre zur Sperrung des Passierbereichs aufweisen. Insbesondere bei Anordnung einer mechanischen Sperre kann sich die dritte Sensorleiste dabei über einen Passierbereich örtlich vor und/oder nach der Sperre erstrecken. Auf diese Weise kann zuverlässig festgestellt werden, ob eine Person und/oder ein Objekt die Sperre tatsächlich passiert hat.

Bevorzugt umfasst das Passiererkennungssystem zumindest eine Rechnereinheit zur Verarbeitung von zumindest einer Meldung zumindest eines der Sensoren, insbesondere mehrerer Sensoren, insbesondere aller Sensoren.

Es erfolgt eine Meldung des jeweiligen Sensors als aktiv, wenn dieser Sensor etwas innerhalb seines Erfassungsbereichs erfasst und es erfolgt eine Meldung des jeweiligen Sensors als passiv, wenn dieser Sensor innerhalb seines Erfassungsbereichs nichts erfasst. Wenn ein bestimmter Sensor aktiv gemeldet wird und ein anderer Sensor nicht, kann der andere Sensor automatisch als passiv gemeldet werden und umgekehrt. Mit anderen Worten kann die Meldung als Statuszustand des jeweiligen Sensors verstanden werden. Die Meldung kann digital oder seriell erfolgen. Insbesondere kann die Meldung im Rahmen eines Datensatzes, insbesondere 0 oder 1, oder im Rahmen einer anliegenden und/oder nicht anliegenden Spannung in Bezug auf den jeweiligen Sensor erfolgen je nachdem ob der jeweilige Sensor etwas oder nichts erfasst. Mittels der Rechnereinheit kann die zumindest eine Meldung des zumindest einen Sensors verarbeitet, insbesondere ausgewertet, werden.

Insbesondere kann das Passiererkennungssystem eine Vorrichtung, insbesondere eine Kamera, zur biometrischen Erkennung, insbesondere Gesichtserkennung umfassen.

Gemäß einem weiteren Aspekt der vorliegenden Erfindung wird ein Verfahren zur berührungslosen Überwachung von wenigstens einem mehrere Bewegungszustände aufweisenden Bewegungsablauf mittels eines erfindungsgemäßen Passiererkennungssystems mit einer Rechnereinheit angegeben, wobei mittels des Kopfsensors zumindest ein erster Bewegungszustand oberhalb des Gehäuses erfasst wird und an die Rechnereinheit übermittelt wird.

Ein Bewegungszustand ist im Rahmen der Erfindung als eine Momentaufnahme des erfassten Passierbereichs durch zumindest einen Sensor des Passiererkennungssystems, insbesondere Kopfsensor, zu verstehen. Ein Bewegungszustand gibt somit anschaulich ausgedrückt an, welche Sensoren etwas, beispielsweise in Form eines neu erkannten Objekts und/oder einer Person in dem jeweiligen Erfassungsbereich zu einem diskreten Zeitpunkt, erfassen.

Durch das Verfahren wird mittels eines Passiererkennungssystems relativ niedriger Höhe ermöglicht, Bewegungsdaten oberhalb zumindest des Gehäuses des Passiererkennungssystems zu erfassen und zu verarbeiten, insbesondere auszuwerten. Dies kann die Zuverlässigkeit des Verfahrens verbessern. Somit kann insbesondere die Sicht im Bereich von derart ausgeführten Systemen verbessert werden. Ferner ermöglicht es den Designanforderungen gerecht zu werden, welche einen halbhohen Aufbau derartiger Systeme bevorzugen. Hinzu fühlen sich passierende Personen beim Passieren wohler, da sie sich weniger eingeengt fühlen.

Insbesondere kann der zumindest eine Bewegungszustand mittels eines Buses, insbesondere eines CAN-Buses, übermittelt werden. Insbesondere kann der zumindest eine Bewegungszustand seriell und/oder digital und/oder drahtlos an die Rechnereinheit übermittelt werden.

Bevorzugt umfasst Verfahren nachfolgende Schritte:
- Meldung des jeweiligen Sensors als aktiv, wenn dieser Sensor etwas innerhalb seines Erfassungsbereichs erfasst und Meldung des jeweiligen Sensors als passiv, wenn dieser Sensor innerhalb seines Erfassungsbereichs nichts erfasst,
- Erfassung von wenigstens dem ersten Bewegungszustand und wenigstens einem zweiten Bewegungszustand durch zumindest den Kopfsensor, insbesondere mehrere Sensoren, mittels der Meldungen zumindest des Kopfsensors, wobei der erste Bewegungszustand und der zweite Bewegungszustand zu jeweils mittelbar oder unmittelbar aufeinander folgenden diskreten Zeitpunkten erfasst werden,
- Übermittlung der Bewegungszustände an die Rechnereinheit,
- Erkennung wenigstens eines Bewegungsablaufs auf Grundlage der übermittelten Bewegungszustände durch die Rechnereinheit.

Ein Bewegungsablauf ist dabei ein Durchschreiten und/oder Passieren des Erfassungsbereichs zumindest der ersten Sensorleiste. Ein Bewegungsablauf kann insbesondere aus dem zeitlichen Vergleich von mehreren Bewegungszuständen erkannt werden. Insbesondere kann bei Anordnung weiterer Sensoren ein einzelner Bewegungszustand ebenfalls die Momentaufnahme der weiteren Sensoren zu demselben Zeitpunkt der Momentaufnahme des Kopfsensors umfassen.

Dabei muss der erste Bewegungszustand nicht notwendig der allererste Bewegungszustand des jeweiligen Bewegungsablaufs sein. Maßgeblich ist lediglich, dass der zweite Bewegungszustand chronologisch nach dem ersten Bewegungszustand erfasst wird.

Selbstverständlich kann dabei die Übermittlung des erfassten ersten Bewegungszustands an die Rechnereinheit zeitlich nach der Erfassung des ersten Bewegungszustands erfolgen, wonach dann erst der zweite Bewegungszustand erfasst und nachfolgend an die Rechnereinheit übermittelt wird. Es ist somit nicht zwingend, dass zunächst mehrere Bewegungszustände erfasst werden und erst zeitlich danach an die Rechnereinheit übermittelt werden, sondern es kann jeder einzelne Bewegungszustand erfasst und übermittelt werden. Insbesondere kann dabei ein Bewegungszustand, der gegenüber dem unmittelbar vorangegangenen Bewegungszustand bezüglich der Meldungen der Sensoren nicht abweicht, gefiltert werden. Das heißt ein solcher Bewegungszustand würde in diesem Fall nicht an die Rechnereinheit übermittelt oder nicht von der Rechnereinheit berücksichtigt werden.

Das Verfahren ermöglicht eine zuverlässige Erkennung der Bewegungsabläufe bei relativ niedriger Ausführung des Passiererkennungssystems. Somit kann insbesondere die Sicht im Bereich von derart ausgeführten Systemen verbessert werden. Ferner ermöglicht es den Designanforderungen gerecht zu werden, welche einen halbhohen Aufbau derartiger Systeme bevorzugen. Hinzu fühlen sich passierende Personen beim Passieren wohler, da sie sich weniger eingeengt fühlen. Ein derart ausgestaltetes erfindungsgemäßes Verfahren ermöglicht vorteilhaft mit hoher Zuverlässigkeit und auch bei geringem Abstand zwischen zwei aufeinander folgenden Personen oder anderen beweglichen Objekten eine Erkennung des jeweiligen Bewegungsablaufs.

Besonders bei Durchführung einer Zugangskontrolle kann ein Identifikationsleser und/oder ein Ticketleser angeordnet werden. Insbesondere dabei kann es in der Regel erforderlich sein, den Zugang lediglich für eine einzelne Person, gegebenenfalls mit einem oder mehreren Objekten, bei einer einzelnen erfolgreich durchgeführten Zugangskontrolle zuzulassen und/oder Missbräuche dieser Regel zu dokumentieren.

Alternativ oder kumulativ kann jedoch die Erfindung auch lediglich zur Zählung von den Passierbereich passierenden Personen und/oder Objekten eingesetzt werden.

Die Rechnereinheit kann zumindest den Kopfsensor insbesondere hinsichtlich der Betriebsfrequenz steuern. Die Rechnereinheit kann insbesondere einen Sender zur Übermittlung des wenigstens einen erfassten Bewegungszustandes und/oder einen Empfänger zum Empfang der erfassten Bewegungszustände und/oder eine Auswerteinheit zur Erkennung des Bewegungsablaufs und/oder Bereitstellungseinheit und/oder eine Bereitstellungseinheit und/oder eine Anzeige zur Darstellung des wenigstens einen Bewegungszustandes und/oder des Bewegungsablaufs aufweisen.

Bevorzugt wird der Bewegungsablauf zumindest einer Person und/oder zumindest einem Objekt zugeordnet. Dadurch wird eine Zählung von passierenden Personen und/oder Objekten ermöglicht. Als Objekt wird ein Gegenstand verstanden. Insbesondere kann der Bewegungsablauf zumindest einer Person zugeordnet wird, wenn innerhalb des Bewegungsablaufs zumindest einmal, insbesondere mehrmals, der Kopfsensor aktiv gemeldet wird. Hierbei wird angenommen, dass lediglich eine Person eine Aktivmeldung des Kopfsensors bewirkt, weil der Erfassungsbereich des Kopfsensors oberhalb des Passiererkennungssystems liegt und bspw. Gegenstände wie Trolleykoffer üblicherweise nicht bis zu diesem Erfassungsbereich reichen.

Insbesondere kann der Bewegungsablauf zumindest einer Person zugeordnet werden, wenn innerhalb des ersten Bewegungszustands alle Sensoren des Leistenkopfes der ersten Sensorleiste und/oder alle Sensoren der zweiten Sensorleiste aktiv gemeldet werden. Hierbei wird angenommen, dass lediglich eine Person innerhalb eines einzelnen Bewegungszustandes alle Sensoren in der Höhe des Leistenkopfes und/oder der zweiten Sensorleiste aktiv melden kann.
Insbesondere kann der Bewegungsablauf zumindest einer Person zugeordnet werden, wenn innerhalb des Bewegungsablaufs jeder einzelne Sensor der ersten Sensorleiste oder jeder einzelne Sensor des Leistenrumpfs der ersten Sensorleiste zumindest einmal aktiv gemeldet wird. Hierdurch wird eine zuverlässige Personenerkennung bereitgestellt. Damit ist gemeint, dass in allen Bewegungszuständen des einzelnen Bewegungsablaufs jeder einzelne Sensor der ersten Sensorleiste oder jeder einzelne Sensor des Leistenrumpfs zumindest einmal aktiv gemeldet wird, wobei es unbeachtlich ist, wann dies im Zeitverlauf des Bewegungsablaufs erfolgt ist. Dabei wird angenommen, dass eine Person innerhalb ihres Bewegungsablaufs zumindest einmal eine Aktivmeldung jedes einzelnen Sensors bewirkt. Dabei muss dies nicht innerhalb eines einzelnen Bewegungszustandes geschehen, sondern innerhalb eines einzelnen Bewegungsablaufs mit allen seinen Bewegungszuständen darin.

Insbesondere kann der Bewegungsablauf zumindest einer Person zugeordnet werden, wenn innerhalb eines einzelnen Bewegungszustands jeder einzelne Sensor der ersten Sensorleiste oder jeder einzelne Sensor des Leistenrumpfs aktiv gemeldet wird. Insbesondere kann der Bewegungsablauf zumindest einer Person zugeordnet werden, wenn innerhalb des ersten Bewegungszustandes zumindest der oberste Sensor der ersten Sensorleiste und/oder der oberste Sensor des Leistenrumpfes und innerhalb des zweiten Bewegungszustandes zumindest der unterste Sensor der Sensorleiste und/oder der unterste Sensor des Leistenrumpfes aktiv gemeldet wird, wobei innerhalb des einzelnen Bewegungsablaufs jeder einzelne Sensor der ersten Sensorleiste oder jeder einzelne Sensor des Leistenrumpfs zumindest einmal aktiv gemeldet wird. Insbesondere kann der Bewegungsablauf zumindest einer Person zugeordnet werden, wenn innerhalb des ersten Bewegungszustandes zumindest der unterste Sensor der ersten Sensorleiste und/oder der unterste Sensor des Leistenrumpfes und innerhalb des zweiten Bewegungszustandes zumindest der oberste Sensor der Sensorleiste und/oder der oberste Sensor des Leistenrumpfes aktiv gemeldet wird, wobei innerhalb des Bewegungsablaufs jeder einzelne Sensor der ersten Sensorleiste oder jeder einzelne Sensor des Leistenrumpfs zumindest einmal aktiv gemeldet wird.

Insbesondere kann der Bewegungsablauf zumindest einer Person zugeordnet werden, wenn bezüglich der Anzahl an von der ersten Sensorleiste, insbesondere von dem Leistenrumpf der ersten Sensorleiste, aktiv gemeldeten Sensoren innerhalb eines einzelnen Bewegungszustandes zumindest einmal eine positive Differenz und/oder zumindest einmal eine negative Differenz zwischen den Bewegungszuständen, insbesondere zwischen zeitlich mittelbar oder unmittelbar aufeinander folgenden Bewegungszuständen, innerhalb des Bewegungsablaufs ermittelt wird. Hierbei wird angenommen, dass eine Person innerhalb des Bewegungsablaufs zumindest einmal eine im zeitlich fortlaufenden Verlauf ansteigende und/oder zumindest einmal eine im zeitlich fortlaufenden Verlauf sinkende Anzahl von aktiven Sensoren der ersten Sensorleiste, insbesondere des Leistenrumpfs der ersten Sensorleiste bewirkt. Dies ermöglicht eine zuverlässige Erkennung eines typischen Schrittes einer Person. Hingegen bewirkt ein stehend geführter Trolleykoffer üblicherweise eine im Zeitverlauf konstante Anzahl an aktiven Sensoren. Auf diese Weise können stehend geführte Trolleys zuverlässig gerade nicht als Personen erkannt werden.

Bevorzugt umfasst die Erkennung des Bewegungsablaufs eine Abgrenzung des Bewegungsablaufs von einem weiteren Bewegungsablauf auf Grundlage eines Trennungskriteriums. Dies ermöglicht eine passierende Person und/oder ein passierendes Objekt von einer nächsten Person und/oder von einem nächsten Objekt zu unterscheiden und so die Personen und/oder Objekte zu zählen.

Insbesondere kann das Trennungskriterium eingreifen, wenn der Kopfsensor zumindest in dem ersten Bewegungszustand, insbesondere in mehreren unmittelbar aufeinanderfolgenden Bewegungszuständen, aktiv und zumindest in einem zweiten Bewegungszustand, insbesondere in mehreren unmittelbar aufeinanderfolgenden Bewegungszuständen, passiv gemeldet wird.

Unter Eingreifen des Trennungskriteriums wird eine Abgrenzung eines Bewegungsablaufs von einem anderen Bewegungsablauf verstanden. Insbesondere kann dabei der zweite Bewegungszustand bereits als zumindest einer der Bewegungszustände des weiteren Bewegungsablaufs herangezogen werden.
Insbesondere kann das Trennungskriterium eingreifen, wenn eine bestimmte Differenz zwischen der Anzahl der aktiv gemeldeten Sensoren der ersten Sensorleiste, insbesondere des Leistenkopfes, insbesondere des Leistenrumpfs, innerhalb des ersten Bewegungszustands und der Anzahl der aktiv gemeldeten Sensoren der ersten Sensorleiste, insbesondere des Leistenkopfes, insbesondere des Leistenrumpfs, innerhalb des zweiten Bewegungszustands ermittelt wird.

Insbesondere kann das Trennungskriterium bei einer Differenz von zumindest zwei bis zwanzig, insbesondere drei bis fünfzehn, insbesondere vier bis zwölf, insbesondere fünf bis zehn, aktiven Sensoren eingreifen.

Insbesondere kann das Trennungskriterium eingreifen, wenn innerhalb eines einzelnen Bewegungszustands eine bestimmte Differenz zwischen der Anzahl der aktiv gemeldeten Sensoren der ersten Sensorleiste, insbesondere des Leistenkopfes und der Anzahl der aktiv gemeldeten Sensoren der zweiten Sensorleiste ermittelt wird.

Insbesondere kann das Trennungskriterium bei einer Differenz von zumindest zwei bis zehn, insbesondere drei, insbesondere vier, insbesondere fünf, aktiven Sensoren eingreifen.

Ein derartiges Trennungskriterium ermöglicht eine zuverlässige Trennung zwischen Bewegungsabläufen von einzelnen Personen oder Objekten. Insbesondere ermöglicht es eine zuverlässige Personenvereinzelung auch bei dicht aufeinanderfolgenden Personen.

Alternativ oder kumulativ kann die Erkennung des Bewegungsablaufs eine Abgrenzung des Bewegungsablaufs von einem weiteren Bewegungsablauf auf Grundlage eines Trennungskriteriums umfassen, wobei das Trennungskriterium eingreift, wenn innerhalb des ersten Bewegungszustands zumindest einer der Sensoren, insbesondere eine bestimmte Anzahl der Sensoren, insbesondere alle Sensoren, des Leistenkopfes und/oder des Leistenrumpfs aktiv gemeldet wird, wobei innerhalb des zweiten Bewegungszustands zumindest einer der Sensoren, insbesondere eine bestimmte Anzahl der Sensoren, insbesondere alle Sensoren, des Leistenkopfes und/oder des Leistenrumpfs passiv gemeldet wird.

Insbesondere kann der erste Bewegungszustand gefiltert werden, wenn der erste Bewegungszustand eine Anzahl bis zu drei, bevorzugt zwei, besonders bevorzugt einem, aktiv gemeldeten Sensoren der Sensorleiste, insbesondere der ersten Sensorleiste, insbesondere innerhalb des Leistenrumpfes aufweist und in einem oder mehreren jeweils unmittelbar darauf folgenden Bewegungszuständen diese Anzahl an aktiv gemeldeten Sensoren um weniger als drei, insbesondere zwei, steigt. Eine derartige Filterung reduziert die Datenflussmenge. Das heißt ein solcher Bewegungszustand wird nicht für die Erkennung eines Bewegungsablaufs herangezogen. Solche Bewegungszustände werden bspw. von schmalen Gegenständen wie Taschenriemen oder schräg gehaltenen Teleskoprohren von Trolleys verursacht und können bei dem Verfahren vernachlässigt werden.

Alternativ oder kumulativ können einzelne Bewegungszustände, die sich gegenüber dem unmittelbar darauffolgenden Zeitpunkt nicht ändern gefiltert werden.

Insbesondere kann die Erkennung des Bewegungsablaufs eine Richtungserkennung des Bewegungsablaufs und/oder eine Wendungserkennung umfassen mit Hilfe einer zweiten zumindest einen Sensor, insbesondere mehrere Sensoren, aufweisenden Sensorleiste, wobei die zweite Sensorleiste neben der ersten Sensorleiste, insbesondere parallel zu der ersten Sensorleiste, angeordnet ist. Die Richtungserkennung kann dadurch erfolgen, dass während eines Bewegungsablaufs in Richtung der ersten Sensorleiste in einem ersten Bewegungszustand die Sensoren, insbesondere eine bestimmte Anzahl an Sensoren, insbesondere alle Sensoren, der zweiten Sensorleiste aktiv und zeitlich danach in einem zweiten Bewegungszustand die Sensoren, insbesondere eine bestimmte Anzahl an Sensoren, insbesondere alle Sensoren des Leistenkopfes, der ersten Sensorleiste aktiv gemeldet werden.

Insbesondere bei einem erfolgenden Durchgang werden in einem weiter darauffolgenden Bewegungszustand zuerst die Sensoren, insbesondere eine bestimmte Anzahl an Sensoren, insbesondere alle Sensoren, der zweiten Sensorleiste passiv gemeldet und danach in einem noch weiter darauffolgenden Bewegungszustand die Sensoren, insbesondere eine bestimmte Anzahl an Sensoren, insbesondere alle Sensoren des Leistenkopfes, der ersten Sensorleiste passiv gemeldet werden. Anders als bei einem Durchgang werden bei einer Wendung innerhalb der Erfassungsbereichs der Sensorleisten, was einem Abbruch des Durchgangs entspricht, in dem weiter darauffolgenden Bewegungszustand zuerst die Sensoren, insbesondere eine bestimmte Anzahl an Sensoren, insbesondere alle Sensoren des Leistenkopfes der ersten Sensorleiste passiv gemeldet und danach in dem noch weiter darauf folgenden Bewegungszustand die Sensoren, insbesondere eine bestimmte Anzahl an Sensoren, insbesondere alle Sensoren, der zweiten Sensorleiste passiv gemeldet werden.

Dies gilt bei einem Bewegungsablauf in Richtung der zweiten Sensorleiste jeweils umgekehrt. Somit kann die Richtung und/oder die Wendung des Bewegungsablaufs zuverlässig erkannt werden. Daher kann das Passiererkennungssystem in beide Richtungen passierbar ausgeführt werden.

Insbesondere kann die Erfassung des zumindest einen Bewegungszustandes eine Ermittlung einer Anzahl an aktiv gemeldeten und/oder an passiv gemeldeten Sensoren, insbesondere innerhalb der ersten Sensorleiste, insbesondere innerhalb des Leistenkopfes und/oder des Leistenrumpfes der ersten Sensorleiste, und/oder innerhalb der zweiten Sensorleiste umfassen. Eine derartige Ermittlung stellt für die zuverlässige Erkennung des Bewegungsablaufs eine nützliche Information dar. Insbesondere kann eine derartige Erfassung innerhalb eines jeden Bewegungszustandes erfolgen.

Insbesondere kann mittels der dritten Sensorleiste eine Personenfußerkennung erfolgen. Insbesondere kann die Erkennung des Bewegungsablaufs eine Personenfußerkennung umfassen, wobei der Bewegungsablauf einem Personenfuß zugeordnet wird, wenn in einem bestimmten diskreten Zeitpunkt eine bestimmte Anzahl, insbesondere der unteren Sensoren, des Leistenrumpfs der ersten Sensorleiste aktiv gemeldet werden und gleichzeitig zumindest der eine Sensor, insbesondere die zumindest zwei Sensoren, der dritten Sensorleiste aktiv gemeldet werden, wobei der zumindest eine Sensor der dritten Sensorleiste in Richtung des Bewegungsablaufs hinter der ersten Sensorleiste angeordnet ist.

Insbesondere kann sich dabei die erste Sensorleiste in ihrem Einbauzustand maximal bis zu einer Höhe von 600 mm, bevorzugt 500 mm, besonders bevorzugt 400 mm, ganz besonders bevorzugt 300 mm, ausgehend von der Bodenkante des Passiererkennungssystems erstrecken. Auch bei derart niedriger Ausführung der ersten Sensorleiste können zur Personenfußerkennung dennoch die Bewegungszustände ausreichen, da hierfür lediglich der untere Bereich des Personenbeins ausschlaggebend ist.

Insbesondere kann der Bewegungsablauf einer Person zugeordnet werden, wenn der Bewegungsablauf einem Personenfuß zugeordnet wird.

Mittels der dritten Sensorleiste kann alternativ oder kumulativ zu der zweiten Sensorleiste eine Richtungserkennung des Bewegungsablaufs erfolgen. Insbesondere kann dabei die Erkennung der Bewegungsrichtung des Bewegungsablaufs derart erfolgen, dass zumindest ein erster Sensor der dritten Sensorleiste und ein zweiter Sensor der dritten Sensorleiste in Bewegungsrichtung neben dem ersten Sensor angeordnet sind und innerhalb des Bewegungsablaufs aktiv gemeldet werden, wobei der zweite Sensor zu einem späteren Zeitpunkt als der erste Sensor aktiv gemeldet wird.

Insbesondere können die Bewegungszustände mittels einer Umwandlungseinheit vor und/oder nach der Übermittlung an die Rechnereinheit umgewandelt werden. Insbesondere können die Bewegungszustände mittels einer Anzeige der Rechnereinheit und/oder einer zusätzlichen Anzeige des Passiererkennungssystems dargestellt werden.

Gemäß einem weiteren Aspekt der Erfindung wird das erfindungsgemäße Verfahren computerimplementiert ausgeführt, wobei der Computer von der Rechnereinheit und/oder von einem zusätzlichen Computer gebildet wird.

Insbesondere kann dazu ein Computerprogramm auf einem Datenträger zur Durchführung des Verfahrens eingesetzt werden. Insbesondere kann dabei zumindest ein Schritt, insbesondere mehrere, insbesondere alle Schritte, des Verfahrens mittels eines auf dem Computer laufenden Algorithmus ausgeführt werden.

Weitere Einzelheiten und Vorteile der Erfindung sollen nachfolgend anhand der in den Figuren teilweise schematisch gezeigten Ausführungsbeispiele erläutert werden. Elemente mit gleicher Funktion und Wirkungsweise sind jeweils mit denselben Bezugszeichen versehen. Es zeigen:
- Fig. 1: eine perspektivische Ansicht einer ersten Ausführungsform eines erfindungsgemäßen Passiererkennungssystems;
- Fig. 2: ein Flussdiagramm einer Ausführungsform eines erfindungsgemäßen Verfahrens;
- Fig. 3: eine Seitenansicht eines Gehäuses mit der ersten sowie der zweiten Sensorleiste;
- Fig. 4a: eine erste Darstellung eines Bewegungsablaufs auf Grundlage von einer Vielzahl von erfassten Bewegungszuständen;
- Fig. 4b: eine zweite Darstellung eines Bewegungsablaufs auf Grundlage von einer Vielzahl von erfassten Bewegungszuständen;
- Fig. 5a: eine Darstellung einer Richtungserkennung;
- Fig. 5b: eine Darstellung einer Wendungserkennung;
- Fig. 6: eine dritte Darstellung auf Grundlage von einer Vielzahl von erfassten Bewegungszuständen;
- Fig. 7: eine vierte Darstellung eines Bewegungsablaufs auf Grundlage von einer Vielzahl von erfassten Bewegungszuständen.

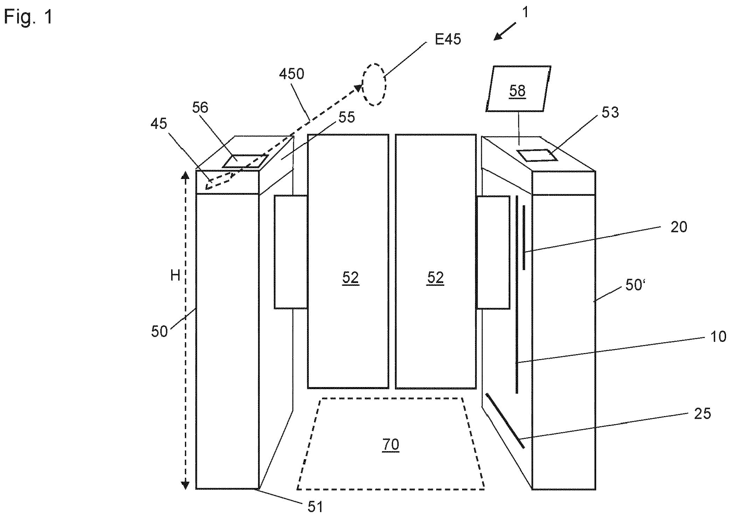

Die Fig. 1 zeigt eine Ansicht einer ersten Ausführungsform eines erfindungsgemäßen Passiererkennungssystems 1 mit einem Scanner 53, zwei verfahrbaren Türen 52, einer Passierstatus-Anzeige 58 und einem Kopfsensor 45 zur Erfassung eines Erfassungsbereich E45 oberhalb eines Gehäuses 50 und eines weiteren Gehäuses 50'. Der Kopfsensor 45 ist dabei in einem als Oberteil des Gehäuses 50 angeordneten Handlauf 55 angeordnet und erfasst dabei seinen Erfassungsbereich E45 durch einen für den Kopfsensor 45 transparenten Bereich 56 des Handlaufs 55 hindurch. Der Pfeil 450 stellt dabei die schräg nach oben verlaufende Erfassungsrichtung des Kopfsensors 45 dar. Der Erfassungsbereich E45 liegt oberhalb der Gehäuse 50, 50' mit jeweils der Höhe H und oberhalb von 1200 mm ausgehend vom Boden 70 des Passierbereichs und ausgehend von einer Bodenkante 51 des Gehäuses 50. Der Kopfsensor 45 ist dabei schräg nach oben ausgerichtet. Hierdurch sind Bewegungen erfassbar, die oberhalb zumindest der Gehäuse 50, 50' stattfinden. Eine erste Sensorleiste 10, eine zweite Sensorleiste 20 und eine dritte Sensorleiste 25 sind dabei am Gehäuse 50' angeordnet und schematisch dargestellt.

Mittels eines derartigen Passiererkennungssystems ist eine zuverlässige Erkennung von Personen bei gleichzeitig niedriger Ausführung der Gehäuse 50, 50' und/oder des Passiererkennungssystems 1 möglich.

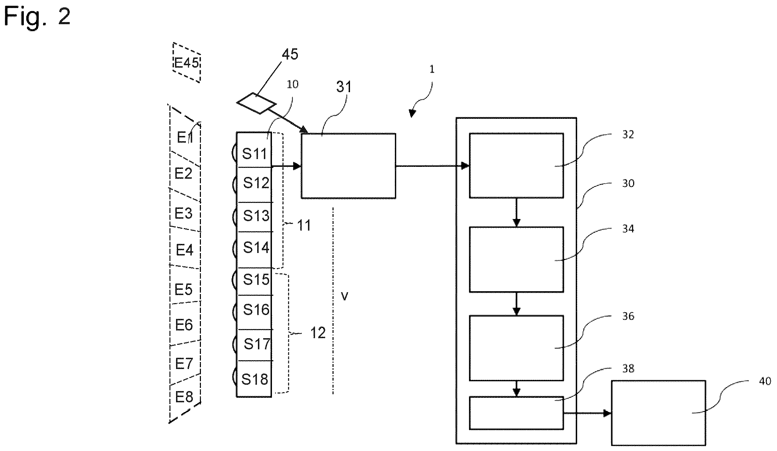

Die Fig. 2 zeigt ein Flussdiagramm eines erfindungsgemäßen Verfahrens mit einem Passiererkennungssystem 1 umfassend den Kopfsensor 45 zur Erfassung des Erfassungsbereichs E45, die erste Sensorleiste 10 mit den Sensoren S11 bis S18 zum Erfassen von Bewegungszuständen 2 innerhalb eines Erfassungsbereichs E1 bis E8, einen Sender 31 zur Übermittlung der Bewegungszustände, eine Rechnereinheit 30 mit einem Empfänger 32 zum Empfang der Bewegungszustände 2, mit einer Auswerteinheit 34 zur Auswertung der Bewegungszustände, mit einer Bereitstellungseinheit 36 zur Bereitstellung der Bewegungszustände 2, mit einer Umwandlungseinheit 38 zur Umwandlung der Bewegungszustände 2 und mit einer Anzeige 40 eines erkannten Bewegungsablaufs 4. Die erste Sensorleiste 10 verläuft dabei entlang des vertikalen Vektors v, wobei seine vertikale Komponente 100 Prozent beträgt. Die erste Sensorleiste 10 ist in einen Leistenkopf 11 mit den oberen vier Sensoren S11 - S14 und in einen beispielhaften Leistenrumpf 12 mit den unteren vier Sensoren S15 - S18 unterteilt. Der Kopfsensor 45 ist schräg nach oben ausgerichtet.

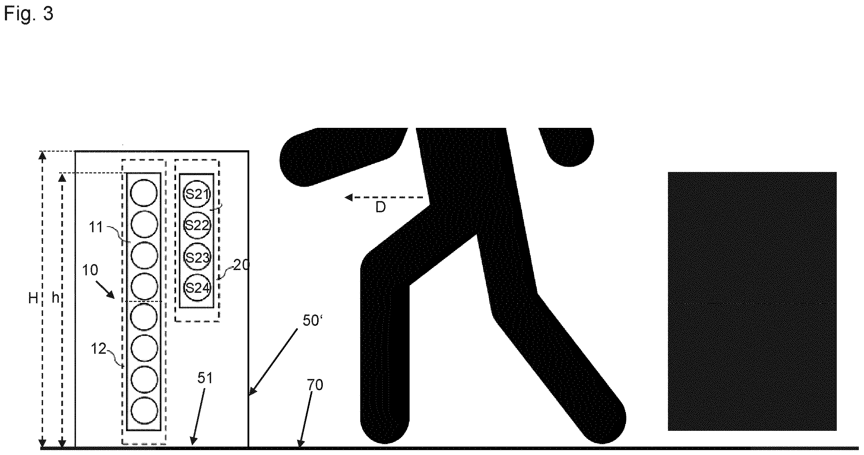

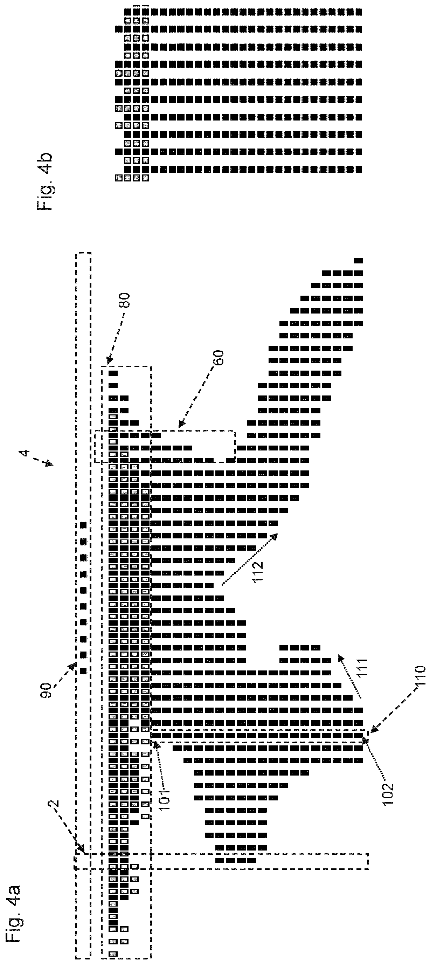

In Fig. 3 ist eine Seitenansicht des weiteren Gehäuses 50' des Passiererkennungssystems mit der ersten Sensorleiste 10 und der neben und parallel zu der ersten Sensorleiste 10 angeordneten zweiten Sensorleiste 20 mit ihren Sensoren S21 - S24 und mit der Bodenkante 51 gezeigt. Die Bodenkante 51 ist auf den Boden 70 des Passierbereichs gestellt. Die erste Sensorleiste 10 erstreckt sich bis zu einer Höhe h ausgehend von der Bodenkante 51. Die erste Sensorleiste 10 erstreckt sich gleichzeitig bis zu einer Höhe h ausgehend von dem Boden 70 des Passierbereichs. Ferner ist eine Person und ein stehend geführter Koffer dargestellt, welche sich in Richtung D bewegen. Die Anzahl an Sensoren, die Länge sowie die Einbauhöhe der zweiten Sensorleiste 20 entsprechen dem Leistenkopf 11 der ersten Sensorleiste 10. Das Gehäuse 50' weist eine Gesamthöhe H auf. Die zweite Sensorleiste 10 dient einer bespielhaften ergänzenden Erfassung von Bewegungszuständen 2, um eine Auswertung der Richtung der erkannten Bewegungsabläufe 4 durch die Rechnereinheit 30 zu ermöglichen. Dies wird anhand der Fig. 4a und Fig. 4b näher erläutert.

Die Fig. 4a zeigt eine Vielzahl von Bewegungszuständen 2 einer Person, die gemäß Fig. 1 und 3 das Passiererkennungssystem 1 passiert. Schwarz ausgefüllte Quadrate stehen für aktiv gemeldete Sensoren des Kopfsensors 45 und der ersten Sensorleiste 10 mit hier abweichend von Fig. 3 insgesamt 24 Sensoren. Nicht oder grau ausgefüllte Quadrate stehen für aktiv gemeldete Sensoren der zweiten Sensorleiste 20 mit insgesamt vier Sensoren. Die leeren Stellen stehen für passiv gemeldete Sensoren des Kopfsensors 45, der ersten Sensorleiste 10 und der zweiten Sensorleiste 20. Jede Spalte repräsentiert einen erfassten Bewegungszustand 2. Die Vielzahl an Spalten ergibt sich aus einem zeitlichen Verlauf der erfassten Bewegungszustände 2, jeweils von dem Kopfsensor 45, von der ersten Sensorleiste 10 und von der zweiten Sensorleiste 20 erfasst, chronologisch von links nach rechts. Jede Zeile stellt die Erfassung des Kopfsensors 45 und jeweils eines Sensors der Sensorleisten 10, 20 im Zeitverlauf von links nach rechts dar. Die oberste Zeile 90 zeigt die Erfassung des Kopfsensors 45. Die vier Zeilen 80 zeigen jeweils die erfassten Bewegungszustände 2 der Sensoren von dem Leistenkopf 11 der ersten Sensorleiste 10 und von der zweiten Sensorleiste 20. Die unteren 20 Zeilen zeigen jeweils die erfassten Bewegungszustände 2 der Sensoren von dem Leistenrumpf 12 der ersten Sensorleiste 10, wobei der Leistenrumpf 12 abweichend von Fig. 3 zwanzig Sensoren aufweist.

Zeile 90 zeigt, dass der Kopfsensor 45 in mehreren aufeinanderfolgenden Bewegungszuständen 2 aktiv gemeldet wird. Dies führt dazu, dass der Bewegungsablauf 4 einer Person zugeordnet wird.

Ferner werden in einem Bewegungszustand 110 alle Sensoren des Leistenrumpfs zumindest einmal aktiv gemeldet, wobei ferner sowohl der oberste Sensor in 101 als auch der unterste Sensor in 102 aktiv gemeldet wird. Ferner wird nachfolgend eine positive Differenz zwischen den Bewegungszuständen im Zeitverlauf innerhalb des Bewegungsablaufs 4 also eine Senkung einer Anzahl an aktiven Sensoren des Leistenrumpfes 12 ermittelt, was durch den Pfeil 111 angedeutet ist. Hinzu wird nachfolgend eine negative Differenz zwischen den Bewegungszuständen also eine Steigerung der Anzahl an aktiven Sensoren des Leistenrumpfes 12 im Zeitverlauf innerhalb des Bewegungsablaufs 4 ermittelt, was durch den Pfeil 112 angedeutet ist. Außerdem wird zeitlich vor dem Bewegungszustand 110 bereits eine Steigerung an aktiven Sensoren des Leistenrumpfs 12 ermittelt. Dies sind weitere bestätigten Bedingungen dafür, dass der Bewegungsablauf 4 einer Person zugeordnet wird.

In einem Bereich 60 ist ferner dargestellt, wann ein Trennkriterium gemäß dem erfindungsgemäßen Verfahren eingreift und somit einen Bewegungsablauf 4 von einem weiteren Bewegungsablauf abgrenzt. Im Bereich 60 sind sowohl einzelne Sensoren des Leistenkopfes 11 sowie der zweiten Sensorleiste 20 als auch einzelne Sensoren des Leistenrumpfs 12 sowie auch der Kopfsensor 45 passiv gemeldet. Dies führt zum Eingreifen des Trennkriteriums und der Bewegungsablauf 4 gilt daher als abgeschlossen.

Anders als in Fig. 4a sind in Fig. 4b Bewegungszustände eines stehend geführten Koffers nach Fig. 2, rechte Seite, dargestellt. Hier werden abweichend von Fig. 4a keine Aktivmeldung des Kopfsensors und auch keine Differenzen der Anzahl an aktiv gemeldeten Sensoren im Leistenrumpf 12 zwischen den Bewegungszuständen innerhalb des Bewegungsablaufs im Zeitverlauf ermittelt. Daher wird dieser Bewegungsablauf nicht einer Person, sondern bspw. einem Objekt zugeordnet.

Mittels des erfindungsgemäßen Verfahrens und des erfindungsgemäßen Passiererkennungssystems ist somit eine zuverlässige Erkennung von Personen bei gleichzeitig niedriger Ausführung des Passiererkennungssystems 1 möglich.

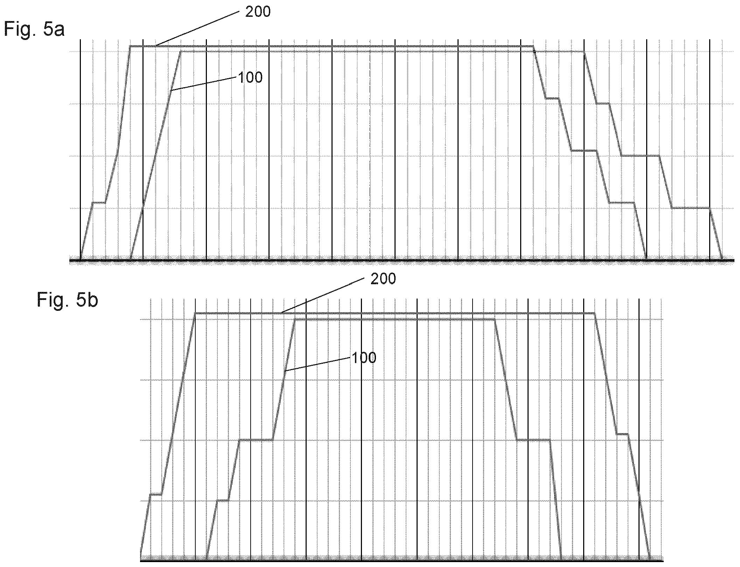

In Fig. 5a ist der zeitliche Verlauf der Anzahl an aktiven Sensoren der vier Zeilen 80 nach Fig. 4a dargestellt. Der Verlauf 100 entspricht dem Leistenkopf 11 der ersten Sensorleiste 10 und der Verlauf 200 entspricht der zweiten Sensorleiste 20. Im ersten Schritt werden zunächst alle vier Sensoren der zweiten Sensorleiste 20 aktiv gemeldet und zeitlich danach alle vier Sensoren des Leistenkopfes 11. Im zweiten Schritt werden zunächst alle Sensoren der zweiten Sensorleiste 20 passiv und zeitlich danach alle Sensoren des Leistenkopfes 11 der ersten Sensorleiste 10. Dies führt dazu, dass die Richtung D des Bewegungsablaufs wie in Fig. 3 dargestellt von rechts nach links erkannt wird.

Im Unterschied dazu ist in Fig. 5b eine Wendung des Bewegungsablaufs dargestellt, wobei anders als zuvor bezüglich Fig. 5a beschrieben im zweiten Schritt zunächst alle Sensoren des Leistenkopfes 11 der ersten Sensorleiste 10 und zeitlich danach alle Sensoren der zweiten Sensorleiste 20 passiv gemeldet werden. Dies führt dazu, dass eine Wendung des Bewegungsablaufs erkannt wird.

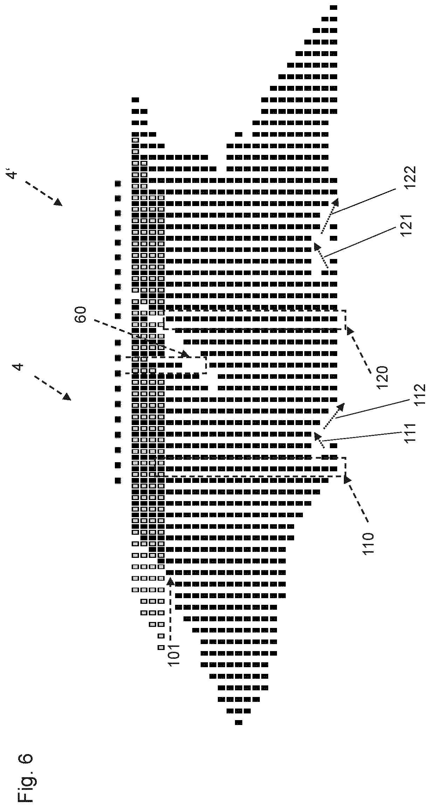

Die Fig. 6 zeigt eine Vielzahl von Bewegungszuständen 2 einer Person und einer weiteren dicht aufeinander folgenden Person. Die Zuordnung des Bewegungsablaufs 4 als Person erfolgt im Wesentlichen analog zur Fig. 4a. Der aktiv gemeldete Kopfsensor 45, alle aktiv gemeldeten Sensoren des Leistenrumpfs 12 in 110, die Senkung der Anzahl an aktiven Sensoren des Leistenrumpfs 12 gemäß Pfeil 111 sowie die Steigerung der Anzahl an aktiven Sensoren des Leistenrumpfs 12 gemäß Pfeil 112 führen hier zu der Zuordnung des Bewegungsablaufs 4 als Person. Im Bereich 60 sind sowohl einzelne Sensoren des Leistenkopfes 11 sowie der zweiten Sensorleiste 20 als auch einzelne Sensoren des Leistenrumpfs 12 passiv gemeldet. Dies führt zum Eingreifen des Trennkriteriums und der Bewegungsablauf 4 gilt daher als abgeschlossen, wobei gleichzeitig der nächste Bewegungsablauf 4' beginnt. Der aktiv gemeldete Kopfsensor 45, alle aktiv gemeldeten Sensoren des Leistenrumpfs 12 in 120, die Senkung der Anzahl an aktiven Sensoren des Leistenrumpfs 12 gemäß Pfeil 121 sowie die Steigerung der Anzahl an aktiven Sensoren des Leistenrumpfs 12 gemäß Pfeil 122 führen hier ebenfalls zu der Zuordnung des Bewegungsablaufs 4' als Person.

Mittels des erfindungsgemäßen Verfahrens und des erfindungsgemäßen Passiererkennungssystems ist somit eine zuverlässige Erkennung von einzelnen Personen bei gleichzeitig niedriger Ausführung des Passiererkennungssystems 1 und bei dicht aufeinander folgenden Personen möglich.

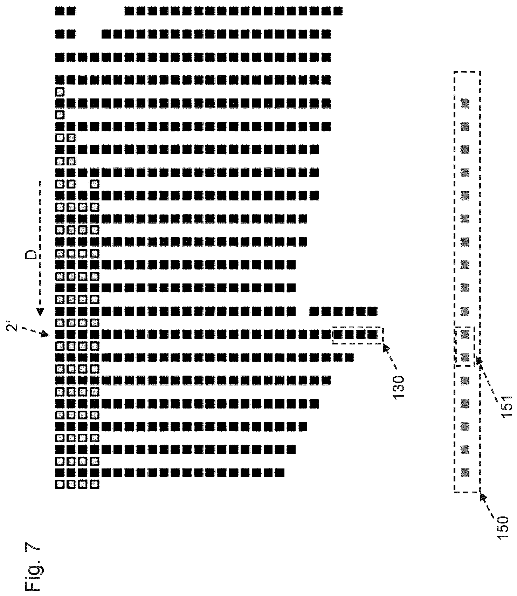

Die Fig. 7 zeigt eine Vielzahl von Bewegungszuständen 2 einer Person mit einem Bewegungsablauf von rechts nach links gemäß Fig. 3 erfasst durch ein Passiererkennungssystem 1 gemäß Fig. 1. Der Bereich 150 bildet dabei einen einzelnen mittels der dritten Sensorleiste 25 erfassten Bewegungszustand jedoch in dem einzelnen Bewegungszustand 2' ab. In diesem Bewegungszustand 2' sind die vier unteren Sensoren des Leistenrumpfs 12, dargestellt durch Bereich 130, aktiv gemeldet. Gleichzeitig in dem diskreten Zeitpunkt des Bewegungszustands 2' sind zwei Sensoren, dargestellt durch Bereich 151, aktiv gemeldet, wobei sich der eine Sensor davon örtlich unterhalb der ersten Sensorleiste 10 befindet und der zweite davon in Bewegungsrichtung D hinter der ersten Sensorleiste 10 befindet. Die Bewegungsrichtung wird dabei analog zur Erläuterung der Fig. 5a erkannt, sodass darauf geschlossen werden kann, welcher der Sensoren der dritten Sensorleiste hinter der ersten Sensorleiste 10 liegt. Dadurch wird der dargestellte Bewegungsablauf einem Personenfuß und damit einer Person zugeordnet.

Mittels des erfindungsgemäßen Verfahrens und des erfindungsgemäßen Passiererkennungssystems ist somit eine zuverlässige Erkennung von einzelnen Personen bei gleichzeitig niedriger Ausführung des Passiererkennungssystems 1 und bei dicht aufeinander folgenden Personen möglich.

### Bezugszeichenliste

- D: Bewegungsrichtung
- H: Höhe
- 1: Passiererkennungssystem
- 2: Bewegungszustand
- 4: Bewegungsablauf
- 10: Erste Sensorleiste
- 11: Leistenkopf
- 12: Leistenrumpf
- 20: Zweite Sensorleiste
- 25: Dritte Sensorleiste
- 30: Rechnereinheit
- 31: Sender
- 32: Empfänger
- 34: Auswerteinheit
- 36: Bereitstellungseinheit
- 38: Umwandlungseinheit
- 40: Anzeige
- 45: Kopfsensor
- 50: Gehäuse
- 51: Bodenkante
- 60: Trennungskriterium
- 70: Boden des Passierbereichs
- 100: Anzahl an aktiven Sensoren des Leistenkopfs
- 110: Personenerkennung
- 111: Senkung der Anzahl an aktiven Sensoren
- 112: Steigerung der Anzahl an aktiven Sensoren
- 200: Anzahl an aktiven Sensoren der zweiten Sensorleiste

- S11 - S18: Sensoren der ersten Sensorleiste
- S21 - S24: Sensoren der zweiten Sensorleiste
- E1 - E8, E45: Erfassungsbereiche

## Patentansprüche

1. Passiererkennungssystem (1) zur berührungslosen Überwachung eines Passierbereichs mit zumindest einem Gehäuse (50), einer Bodenkante (51), insbesondere zur Aufstellung auf einen Boden (70) des Passierbereichs, und mit einem Kopfsensor (45) zur Erfassung eines Erfassungsbereichs (45), **dadurch gekennzeichnet, dass** der Erfassungsbereich (E45) des Kopfsensors (45) oberhalb des Gehäuses (50) liegt.

2. Passiererkennungssystem (1) nach Anspruch 1, **dadurch gekennzeichnet, dass** der Erfassungsbereich (E45) des Kopfsensors (45) durch einen für den Kopfsensor (45) transparenten Bereich (56) des Gehäuses (50) hindurch erfassbar ist.

3. Passiererkennungssystem (1) nach Anspruch 1 oder 2, **dadurch gekennzeichnet, dass** das Passiererkennungssystem (1) einen Handlauf (55) aufweist, insbesondere dass der Kopfsensor (45) in dem Handlauf (55) angeordnet ist und/oder dass der transparente Bereich (56) in dem Handlauf (55) angeordnet ist.

4. Passiererkennungssystem (1) nach einem der vorherigen Ansprüche, **dadurch gekennzeichnet, dass** mittels des Kopfsensors (45) eine digitale oder serielle Meldung generierbar ist.

5. Passiererkennungssystem (1) nach einem der vorherigen Ansprüche, **dadurch gekennzeichnet, dass** der Kopfsensor (45) als Reflexionssensor ausgebildet ist.

6. Passiererkennungssystem (1) nach einem der vorherigen Ansprüche, **dadurch gekennzeichnet, dass** wenigstens eine entlang eines vertikalen Vektors (v) verlaufende und mehrere Sensoren (S11 - S18) aufweisende erste Sensorleiste (10) angeordnet ist, wobei sich die erste Sensorleiste (10) in ihrem Einbauzustand maximal bis zu einer Höhe (h) von 1300 mm, bevorzugt 1200 mm, besonders bevorzugt 1100 mm, ganz besonders bevorzugt 1000 mm, ausgehend von der Bodenkante (51) des Passiererkennungssystems (1) erstreckt.

7. Passiererkennungssystem (1) nach Anspruch 6, **dadurch gekennzeichnet, dass** zumindest die erste Sensorleiste (10) einen zumindest einen, insbesondere mehrere, der oberen Sensoren (S11 - S14) umfassenden Leistenkopf (11) und einen zumindest einen Sensor (S15, S16, S17, S18), insbesondere mehrere Sensoren (S15 - S18), umfassenden Leistenrumpf (12) unterhalb des Leistenkopfs (11) aufweist.

8. Passiererkennungssystem (1) nach Anspruch 6 oder 7, **dadurch gekennzeichnet, dass** das Passiererkennungssystem (1) eine zweite zumindest einen Sensor (S21, S22, S23, S24), insbesondere mehrere Sensoren (S21 - S24), aufweisende Sensorleiste (20) umfasst, wobei die zweite Sensorleiste (20) neben der ersten Sensorleiste (10), insbesondere parallel zu der ersten Sensorleiste (10), angeordnet ist, wobei die zweite Sensorleiste (20) weniger Sensoren als die erste Sensorleiste (10) aufweist und/oder wobei die zweite Sensorleiste (20) kürzer als die erste Sensorleiste (10) ausgebildet ist und/oder wobei die zweite Sensorleiste (20) sich über die Höhe des Leistenkopfs (11) der ersten Sensorleiste (10) erstreckt.

9. Passiererkennungssystem (1) nach einem der vorherigen Ansprüche, **dadurch gekennzeichnet, dass** eine, insbesondere unterhalb der ersten Sensorleiste (10), entlang eines horizontalen Vektors verlaufende dritte Sensorleiste (25) mit zumindest einem Sensor, insbesondere zumindest zwei Sensoren, angeordnet ist.

10. Passiererkennungssystem (1) nach einem der vorherigen Ansprüche, **dadurch gekennzeichnet, dass** das Passiererkennungssystem (1) zumindest eine Rechnereinheit (30) zur Verarbeitung von zumindest einer Meldung zumindest eines der Sensoren (45, S11 - S18, S21 - S24), insbesondere mehrerer Sensoren (45, S11 - S18, S21 - S24), umfasst.

11. Verfahren zur berührungslosen Überwachung von wenigstens einem mehrere Bewegungszustände (2) aufweisenden Bewegungsablauf (4) mittels eines Passiererkennungssystems (1) nach einem oder mehreren der vorhergehenden Ansprüche mit einer Rechnereinheit (30), **dadurch gekennzeichnet, dass** mittels des Kopfsensors (45) zumindest ein erster Bewegungszustand (2) oberhalb des Gehäuses (50) erfasst wird und an die Rechnereinheit (30) übermittelt wird.

12. Verfahren nach Anspruch 11, wobei das Verfahren nachfolgende Schritte umfasst:
- Meldung des jeweiligen Sensors (45, S11 - S18, S21 - S24) als aktiv, wenn dieser Sensor (45, S11 - S18, S21 - S24) etwas innerhalb seines Erfassungsbereichs (E45, E1 - E8) erfasst und Meldung des jeweiligen Sensors (45, S11 - S18, S21 - S24) als passiv, wenn dieser Sensor (45, S11 - S18, S21 - S24) innerhalb seines Erfassungsbereichs (E45, E1 - E8) nichts erfasst,
- Erfassung von wenigstens dem ersten Bewegungszustand (2) und wenigstens einem zweiten Bewegungszustand (2) mittels der Meldungen zumindest des Kopfsensors (45), insbesondere der Sensoren (45, S11 - S18, S21 - S24), wobei der erste Bewegungszustand (2) und der zweite Bewegungszustand (2) zu jeweils mittelbar oder unmittelbar aufeinander folgenden diskreten Zeitpunkten erfasst werden,
- Übermittlung der Bewegungszustände (2) an die Rechnereinheit (30),
- Erkennung wenigstens eines Bewegungsablaufs (4) auf Grundlage der übermittelten Bewegungszustände (2) durch die Rechnereinheit (30).

13. Verfahren nach einem der vorangegangenen Ansprüche, **dadurch gekennzeichnet, dass** der Bewegungsablauf (4) zumindest einer Person und/oder zumindest einem Objekt zugeordnet wird, insbesondere dass der Bewegungsablauf (4) zumindest einer Person zugeordnet wird, wenn innerhalb des Bewegungsablaufs (4) zumindest einmal, insbesondere mehrmals, der Kopfsensor (45) aktiv gemeldet wird.

14. Verfahren nach einem der vorangegangenen Ansprüche, **dadurch gekennzeichnet, dass** die Erkennung des Bewegungsablaufs (4) eine Abgrenzung des Bewegungsablaufs (4) von einem weiteren Bewegungsablauf (4') auf Grundlage eines Trennungskriteriums (60) umfasst, insbesondere dass das Trennungskriterium eingreift, wenn der Kopfsensor (45) zumindest in dem ersten Bewegungszustand (2) aktiv und zumindest in einem zweiten Bewegungszustand (2) passiv gemeldet wird.

15. Computerimplementiertes Verfahren nach einem der Ansprüche 11 bis 14, wobei der Computer von der Rechnereinheit (30) und/oder von einem zusätzlichen Computer gebildet wird.
